# EUROPÄISCHE PATENTSCHRIFT

(11) **EP 2 303 596 B1**
(45) Veröffentlichungstag und Bekanntmachung des Hinweises auf die Patenterteilung: **05.12.2018**
(21) Anmeldenummer: 09772198.9
(22) Anmeldetag: 02.07.2009
(51) Int. Cl.: B42D 25/00, B29L 17/00, B29C 65/08, B29C 65/00, B42D 15/02, B42D 25/24

(54) **VERFAHREN ZUM HERSTELLEN EINER DOKUMENTENKARTE, DIE IN EIN ALS BUCH AUSGEFÜHRTES SICHERHEITSDOKUMENT EINFÜGBAR IST, UND DOKUMENTENKARTE**
METHOD FOR PRODUCING A DOCUMENT CARD WHICH CAN BE INSERTED INTO A SECURITY DOCUMENT THAT IS PRESENT IN THE FORM OF A BOOK AND DOCUMENT CARD
PROCÉDÉS DE FABRICATION D'UNE CARTE DE DOCUMENT POUVANT ÊTRE INSÉRÉE DANS UN DOCUMENT DE SÉCURITÉ SE PRÉSENTANT SOUS FORME DE LIVRET, ET CARTE DE DOCUMENT

(30) Priorität: 03.07.2008 DE 102008031654
(43) Veröffentlichungstag der Anmeldung: 06.04.2011
(73) Patentinhaber: Bundesdruckerei GmbH, 10969 Berlin (DE)
(72) Erfinder: RADTKE, Michael, 12489 Berlin (DE); STIEMERT, Peter, 10787 Berlin (DE); JANKOWSKI, Andreas, 16341 Panketal (DE); MÄRTENS, Detlef, 13599 Berlin (DE); EHREKE, Jens, 12587 Berlin (DE); ANTONCZIK, Boris, 13439 Berlin (DE)
(74) Vertreter: Obst, Bernhard
(86) Internationale Anmeldenummer: PCT/EP2009/004965
(87) Internationale Veröffentlichungsnummer: WO 2010/000498

(56) Entgegenhaltungen:
- EP-A- 1 008 459
- EP-A- 1 574 359
- WO-A-2004/074000
- WO-A-2004/110780

## Beschreibung

Die Erfindung betrifft ein Verfahren zum Herstellen einer Dokumentenkarte, die in ein als Buch ausgeführtes Sicherheitsdokument einfügbar ist. Ferner betrifft die Erfindung eine solche Dokumentenkarte.

Moderne Sicherheitsdokumente umfassen meist einen Dokumentenkarte oder sind als Dokumentenkarte ausgebildet, in der Informationen gespeichert sind. Diese umfassen beispielsweise einen Namen, eine Adresse, einen Geburtstag usw. einer Person, der das Sicherheitsdokument zugeordnet ist, oder andere Angaben wie eine Seriennummer, Angaben über einen Aussteller usw. Um diese Informationen gegen eine Verfälschen oder das gesamte Sicherheitsdokument gegen ein unautorisiertes Nachbilden oder Fälschen zu schützen, umfassen die Dokumentenkarten einen zumindest teilweise aus Kunststoff ausgebildeten Dokumentenkörper oder Kartenkörper. Solche Kartenkörper sind häufig als Mehrschichtkartenkörper ausgebildet.

Sicherheitsdokumente, die einen aus mehreren Schichten aufgebauten Kartenkörper umfassen, werden heutzutage als Identifikationsdokumente, wie beispielsweise in Pässen, in buchartigen Personalausweisen, als Führerscheine, vorläufige Personaldokumente, Sicherheitsdokumente, Zugangsberechtigungen oder dergleichen, verwendet. Bei der Herstellung eines aus mehreren Schichten erstellten Kartenkörpers werden mehrere Schichten aus Kunststoffmaterialien übereinander geschichtet und in einem Laminationsprozess miteinander zu dem Kartenkörper verbunden. Zumindest einige der Schichten sind heutzutage in der Regel aus einem Polycarbonat (PC) hergestellt. Zur Personalisierung eines Mehrschichtsicherheitsdokumentkörpers, der Polycarbonatschichten umfasst, kann Laserstrahlung verwendet werden, die in unterschiedlichen Ebenen und/oder Schichten des laminierten Körpers Schwärzungen hervorrufen kann, mit denen beispielsweise Buchstaben, Zahlen aber auch Grafiken darstellbar sind. In Mehrschichtsicherheitsdokumentkörpern können eine Vielzahl weiterer Sicherheitsmerkmale eingearbeitet werden, beispielsweise Hologramme eingeklebt und/oder einlaminiert werden, Mikrochips eingeklebt und/oder einlaminiert werden, Sicherheitsfäden eingearbeitet werden usw. Alle diese Merkmale, einschließlich einer Laserpersonalisierung, werden verwendet, um ein Fälschen eines Sicherheitsdokuments und/oder ein Reproduzieren des Sicherheitsdokuments zu erschweren und/oder unmöglich zu machen.

Dokumentenkarten mit einem Kartenkörper werden auch in passartige Sicherheitsdokumente eingearbeitet, die ein oder mehrere Papierseiten in Form eines Buchs oder Büchleins umfassen, um auf diesen Sichtvermerke, Visa usw. anbringen zu können. Dokumentenkarten, die ausschließlich aus PC-Schichten hergestellt sind, eignen sich nicht, um diese in ein Passbuch, in dem die einzelnen Seiten buchbinderisch vernäht sind, einzuarbeiten. Daher ist es üblich, Dokumentenkarten mit einem Kartenkörper herzustellen, in den mindestens eine Schicht eingearbeitet ist, die aus einem anderen Kunststoffmaterial besteht, welches sich zum Einbinden in ein Passbuch eignet und ein problemloses Umblättern der Dokumentenkarte in dem Passbuch ermöglicht. Eine solche Kunststoffschicht besteht vorzugsweise aus einem thermoplastischen Elastomer, bevorzugt aus einem thermoplastischen Polyurethan (TPU). Diese Kunststoffsicht wird so eingearbeitet, dass sie eine Lasche bildet, die in das Buch des Sicherheitsdokuments eingebunden wird.

Aus dem Stand der Technik ist aus der EP 1 502 765 A1 beispielsweise ein Büchlein mit einem personalisierten Datenblatt bekannt. Das Büchlein weist zwischen einem Umschlag mehrere Blätter auf und jedes Blatt besitzt eine Vorderseite und eine Rückseite. Es ist wenigstens eine Datenseite vorgesehen, die fest mit dem Umschlag verbunden ist. Die Datenseite weist eine flexible Schicht auf und diese flexible Schicht ragt mit einem Bereich aus einem Datenträger heraus. In diesem Bereich ist die Datenseite mit dem Umschlag und den übrigen Blättern verbunden. Die flexible Schicht ist mit wenigstens einer weiteren Schicht flächig verbunden, beispielsweise durch Verschweißen oder Verkleben, und damit ohne mechanisches Verbindungsteil unlösbar eingebunden.

Die EP 1 008 459 A1 beschriebt ein Verfahren zur Herstellung eines Büchleins und ein solches Büchlein, bei dem ein Laschenabschnitt mittels eines Befestigungsstreifens an einem Kartenkörper befestigt wird. Eine ähnliche Identitätskarte mit einem mittels eines Befestigungsstreifens befestigen Laschenabschnitts zeigt die WO 2004/074000 A1.

Die WO 2004/110780 A1 und die EP1 574 359 A2 zeigen Datenseiten mit einem Laschenabschnitt und Verfahren zu deren Herstellung, bei denen der Laschenabschnitt zwischen Schichten der Datenseite laminiert ist.

Aus der DE 103 42 946 A1 ist ein Einlageblatt für ein buchartiges Identifikationsdokument, ein Identifikationsdokument und ein Verfahren zur Herstellung eines buchartigen Identifikationsdokuments bekannt, wobei das Einlageblatt mit einer Naht in einem Scharnierbereich entlang einer Seite mit den übrigen Buchteilen verbindbar ist. Das Einlageblatt besteht aus mindestens einer Schicht aus einem thermoplastischen Elastomer und mindestens einer weiteren Schicht. Die mindestens eine weitere Schicht erstreckt sich in Richtung der Einlageblattebene im Wesentlichen von der der Naht gegenüberliegenden Seite bis zu dem Scharnierbereich und die mindestens eine Schicht aus dem thermoplastischen Elastomer erstreckt sich in den Scharnierbereich hinein. Die Schichten, die das Einlageblatt bilden, sind miteinander laminiert. Andere Ausführungsformen sehen vor, dass das thermoplastische Elastomer sich nicht durch den gesamten Kartenkörper erstreckt sondern nur an dem der Naht zugewandten Randbereich in den Kartenkörper einlaminiert ist. Als bevorzugtes thermoplastisches Elastomer wird thermoplastisches Polyurethan (TPU) vorgeschlagen. Für die mindestens eine weitere Schicht werden hochtemperaturstabile Kunststoffe, beispielsweise Polycarbonate (PC), vorgeschlagen. Die Personalisierung des Einlageblattes, welches eine Dokumentenkarte ist, erfolgt in den höhertemperaturstabilen Kunststoffen.

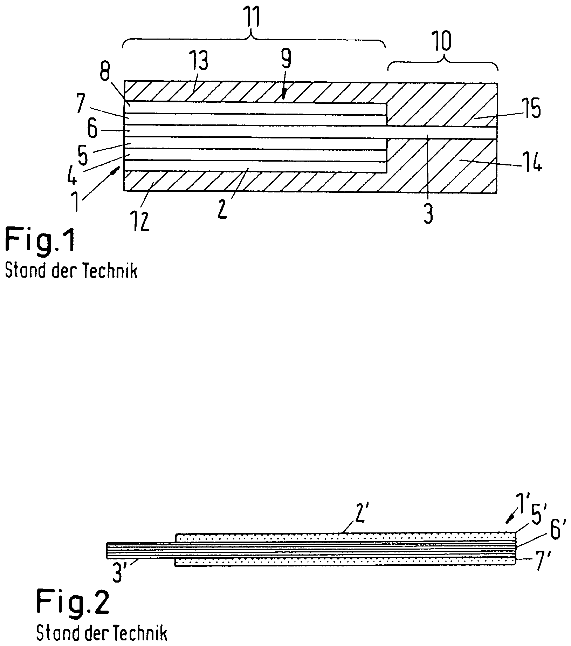

In Fig. 1 ist schematisch die Herstellung einer Dokumentenkarte 1 nach dem Stand der Technik dargestellt. Die Dokumentenkarte umfasst einen Kartenkörper 2 und einen hiermit verbundenen Laschenabschnitt 3. Der Laschenabschnitt 3 ist für ein Einbinden in ein buchartiges Sicherheitsdokument vorgesehen. Der Laschenabschnitt 3 stellt somit einen Scharnierbereich dar, der eine Elastizität oder Flexibilität aufweist, die es ermöglichen, die in ein buchartig ausgebildetes Sicherheitsdokument eingebundene Dokumentenkarte 1 umzublättern.

Der Kartenkörper 2 wird aus mehreren übereinander geschichteten Substratschichten 4-8 hergestellt. Eine mittlere Substratschicht 6 ragt aus einem gebildeten Schichtenstapel 9 heraus. Der herausragende Abschnitt 10 der mittleren Substratschicht 6 bildet den Laschenabschnitt 3. Die mittlere Substratschicht 6 ist somit aus einem thermoplastischen Elastomers gebildet. Die übrigen Substratschichten 4,5,7,8 können aus beliebigen anderen thermoplastischen Kunststoffmaterialien, beispielsweise Polycarbonat (PC) bestehen. Um die Substratschichten 4-8 in einem gemeinsamen Überlappungsbereich 11 zu dem Kartenkörper 2 zusammenzufügen, werden die Substratschichten 4-8 zwischen zwei Laminierblechen 12, 13 angeordnet. Diese weisen Vorsprünge 14,15 auf, die einen Materialstärkeunterschied zwischen dem Kartenkörpers 2 und dem Laschenabschnitt 3 ausgleichen. Um die Substratschichten 4-8 im Bereich des Kartenkörpers 2 miteinander zu verbinden, werden die Substratschichten 4-8, vorzugsweise unter Vakuumbedingungen erwärmt. Gleichzeitig wird auf die Laminierbleche 12, 13 ein Druck ausgeübt. In der Praxis werden mehrere solcher Anordnungen, wie sie in Fig. 1 dargestellt sind übereinander geschichtet und der Laminationsvorgang im so genannten Mehrfachnutzen ausgeführt.

Laminierbleche, die einen an das Ausbilden einer Lasche angepassten Vorsprung aufweisen werden auch als Laschenbleche bezeichnet. Diese Laschenbleche unterliegen einem hohen Verschleiß. Eine Herstellung der Laschenbleche ist aufgrund der benötigten Vorsprünge kostenintensiv. Ferner ist ein automatisiertes Zusammentragen der Substratschichten und Anordnen zwischen den Laschenblechen nicht möglich. Vielmehr hat ein Einlegen oder Anordnen der Substratschichten zwischen den Laschenblechen manuell zu erfolgen.

Der Erfindung liegt die technische Aufgabe zugrunde, ein Verfahren zur Herstellung einer Dokumentenkarte, die in ein buchartiges Sicherheitsdokument einfügbar ist, anzugeben, welches kostengünstiger und einfacher auszuführen ist, sowie eine solche einfacher und kostengünstiger hergestellte Dokumentenkarte zuschaffen.

### Grundzüge der Erfindung

Der Erfindung liegt der Gedanke zugrunde, eine Herstellung des Kartenkörpers einer Dokumentenkarte von dem Ausbilden und/oder Verbinden mit einer Lasche oder einem Laschenabschnitt zu trennen. Der Kartenkörper kann so als Laminationskörper aus mehreren Substratschichten mit flachen Laminationsblechen hergestellt werden. Ein passgenaues Einlegen wie es bei der Verwendung von mit Vorsprüngen versehenen Laminationsblechen (oder Laschenblechen) im Stand der Technik erforderlich ist, kann entfallen. Hier durch wird eine Automatisierung des Zusammentragens und Anordnens der Substratschichten zwischen den Laminierblechen erleichtert oder erst ermöglicht. Wird der Kartenkörper aus Polymerenschichten hergestellt, deren Erweichungs- oder Glastemperatur oberhalb von der des Materials liegt, aus der der Laschenabschnitt gebildet wird, so kann eine Erwärmung auf diese höhere Erweichungstemperatur beim Laminationsvorgang ausgeführt werden, ohne das ein nachteiliges vollständiges Aufschmelzen des Materials zu befürchten ist, aus dem der Laschenabschnitt gebildet ist.

Werden die Substratschichten auf Rollen bereitgestellt, so kann eine Kartenkörperherstellung in einer Vorrichtung kontinuierlich ausgeführt werden. Ferner können andersartig, d.h., nicht über Lamination, hergestellte Kartenkörper in Dokumentenkarten eingearbeitet werden.

Insbesondere wird ein Verfahren zum Herstellen einer Dokumentenkarte, die in ein als Buch ausgeführtes Sicherheitsdokument einfügbar ist, vorgeschlagen, die folgende Schritte umfasst:
Bereitstellen eines Kartenkörpers,
Einbringen von Durchgangslöchern in den Kartenkörper entlang eines Rands des Kartenkörpers,
Bereitstellen von mindestens zwei Laschenstreifen;
Anordnen des Kartenkörpers zwischen den mindestens zwei Laschenstreifen, sodass die Durchganglöcher jeweils auf beiden Seiten, einer Oberseite und einer Unterseite, des Kartenkörpers überdeckt sind und die Laschenstreifen jeweils mit einem Überstand über den Rand des Kartenkörpers hinausragen,
Einbringen von Energie in Form von Schallwellen, insbesondere Schallwellen im Ultraschall-Frequenzbereich, an den Stellen der Durchgangslöcher in einem Überlappungsbereich der mindestens zwei Laschenstreifen und des Kartenkörpers, so dass Verbindungen zwischen den mindestens zwei Laschenstreifen durch die Durchgangslöcher hindurch hergestellt werden und so die Laschenstreifen formschlüssig mit dem Kartenkörper verbunden werden. Hierdurch erhält man eine Dokumentenkarte, die in ein als Buch ausgeführtes Sicherheitsdokument einfügbar ist, umfassend:
   einen Kartenkörper, in dem entlang eines Rands des Kartenkörpers Durchgangslöcher ausgebildet sind,
   mindestens zwei Laschenstreifen, wobei der Kartenkörpers zwischen den mindestens zwei Laschenstreifen angeordnet ist, sodass die Durchganglöcher jeweils auf beiden Seiten, einer Oberseite und einer Unterseite, des Kartenkörpers überdeckt sind und die Laschenstreifen jeweils mit einem Überstand über den Rand des Kartenkörpers hinausragen,
   und wobei Laschenstreifen durch die Durchgangslöcher miteinander Verbunden sind, und so die Laschenstreifen formschlüssig mit dem Kartenkörper verbunden sind, wobei die Verbindungen über ein Einbringen von Energie in Form von Schallwellen an den Stellen der Durchgangslöcher hergestellt sind.

Die Laschenstreifen werden vorzugsweise über Ultraschallschweißen durch die Durchgangslöcher miteinander verbunden. Die Verbindungen, über die die Laschenstreifen durch die Durchgangslöcher miteinander Verbunden sind, sind somit vorzugsweise Ultraschallschweißverbindungen.

Die Erfindung ermöglicht es Kartenkörper zu verwenden die aus Substratschichten laminiert sind, die alle auf Basis desselben Polymers hergestellt sind und sich in einem Laminationsprozess stoffschlüssig zu einem monolithischen Kartenkörper verbinden. Im Kartenkörper sind keine Grenzflächen zwischen den ursprünglichen Substratschichten mehr zu erkennen, aus denen der Kartenkörper laminiert ist.

### Definitionen

Als Dokumentenkarte wird ein kartenförmiger Gegenstand bezeichnet, der als Seite in ein als Buch ausgebildetes Sicherheitsdokument eingebunden werden kann oder ist. Eine solche Dokumentenkarte umfasst einen Abschnitt, der mit den übrigen, in der Regel auf Papierbasis hergestellten Seiten und einem Einband eingebunden wird. Dieser Abschnitt wird als Laschenabschnitt oder auch verkürzt als Lasche bezeichnet.

Ein kartenartig ausgebildeter Bestandteil der Dokumentenkarte, in dem in der Regel die Informationen gespeichert sind und die Sicherheitsmerkmale ausgebildet, eingebracht oder integriert sind und der mit dem Laschenabschnitt verbunden ist, wird als Kartenkörper bezeichnet. Dieser ist in der Regel als Laminationskörper aus mehreren Schichten des gleichen Polymer-Materials oder verschiedener Polymer-Materialien hergestellt. Ein Kartenkörper kann jedoch auf beliebige andere Weise, beispielsweise als Spritzgusskörper, hergestellt werden oder sein.

Als Laschenstreifen werden streifenförmige Substratstücke sowie streifenförmige Enden eines Substrats aus einem thermoplastischen Elastomermaterials bezeichnet, die zum Ausbilden eines Einfügeabschnitts oder Laschenabschnitts geeignet sind, die in ein als Buch ausgeführtes Sicherheitsdokument einfügbar, insbesondere einnähbar sind . Ein Bogen eines ausreichend elastischen thermoplastischen Kunststoffmaterials umfasst gemäß dieser Definition ebenfalls zwei Laschenstreifen. Werden beispielsweise zwei gegenüber liegende Kanten eines rechteckigen Bogens aufeinander gefaltet, so bilden die entlang der Kanten verlaufenden Steifen des Bogens (die sich bis zur Knickkante erstrecken) zwei Laschenstreifen, zwischen denen der Kartenkörper in der oben angegeben Weise angeordnet werden kann.

Als Durchgangslöcher werden alle einen Körper von einer Seite zu einer gegenüberliegenden Seite durchdringenden Aussparungen beliebiger Form und Ausgestaltung angesehen, die zumindest auf einer der Seiten des Körpers vollständig von Material des Körpers umschlossen sind. Dieses bedeutet, dass die Aussparungen nicht "auf" einem Rand des Körpers gebildet sind bzw. zu diesem Rand entlang der gesamten Materialstärke des Körpers offen sind.

### Bevorzugte Ausführungsformen

Eine besonders stabile Verbindung zwischen den mindestens zwei Laschenstreifen läst sich herstellen, wenn die Durchgangslöcher mit einem Verbindungsmaterial vor oder während des Anordnens zwischen den mindestens zwei Laschenstreifen verfüllt werden. In der Dokumentenkarte ist somit in die Durchgangslöcher ein Verbindungsmaterial angeordnet ist, über das die Verbindung zwischen den mindestens zwei Laschenstreifen ausgebildet ist. So können auch insbesondere Kartenkörper mit einer großen Kartenstärke, dass heißt, mit Durchgangslöchern einer großen Tiefe, zuverlässig mit Laschenstreifen versehen werden. Das Material der Laschenstreifen muss sich nicht vollständig in die Durchgangslöcher ausdehnen bzw. in diese fließen um die Verbindung zwischen den mindestens zwei Laschenstreifen auszubilden.

Das Verbindungsmaterial wird vorzugsweise so gewählt, dass die Laschenstreifen, die bevorzugt aus demselben Material bestehen, über das Verbindungsmaterial miteinander Stoffschlüssig verbunden werden bzw. in der Dokumentenkarte verbunden sind.

Bei einer bevorzugten Ausführungsform umfasst das Verbindungsmaterial Polymere oder Polymerderivate des Polymers, auf dessen Basis die Laschenstreifen hergestellt werden oder hergestellt sind.

Eine andere Ausführungsform sieht vor, dass das Verbindungsmaterial einen Haftvermittler umfasst.

Das Verbindungsmaterial wird vorzugsweise in Form eines Granulats in die Durchgangslöcher eingebracht.

Bevorzugt werden die Laschenstreifen in jenem Bereich, in dem diese über den Rand des Kartenkörpers hinausragen, über einen Energieeintrag in Form von Schallwellen miteinander zu einem Einfügeabschnitt verbunden werden. Der Einfügeabschnitt wird auch als Laschenabschnitt bezeichnet. Der Energieeintrag erfolgt vorzugsweise punktförmig und zeitgleich mit dem Energieeintrag an den Stellen der Durchgangslöcher. Alternative Ausführungsformen können jedoch vorsehen, dass das Verbinden der Laschenstreifen in dem über den Rand des Kartenkörpers hinausragenden Bereich zeitlich versetzt erfolgt.
Bei einigen Ausführungsformen ist vorgesehen, dass die Laschenstreifen bereits vor dem Anordnen des Kartenkörpers zwischen den Laschenstreifen in dem Bereich der den Laschenabschnitt oder Einfügeabschnitt bildet verbunden werden. So wird ein Handhaben der Laschenstreifen beim Anordnen erleichtert.

Um einen Materialstärke der Dokumentenkarte im Bereich, in dem die Laschenstreifen mit dem Kartenkörper verbunden sind, zu begrenzen ist bei einer Ausführungsform der Erfindung vorgesehen, dass von dem Kartenkörper an dessen Oberseite und/oder dessen Unterseite in einem Bereich oder den Bereichen, in denen die mindestens zwei Laschenstreifen den Kartenkörper überdecken, Material abgetragen wird, sodass die Laschenstreifen in der fertig gestellten Dokumentenkarte nicht über die Oberseite und/oder Unterseite des Kartenkörpers vorstehen. Dieses bedeutet, dass in den Kartenkörper angrenzend an den Rand in jenem Bereich, in dem die Durchgangslöcher ausgebildet sind oder werden und in dem der Kartenkörper von den mindestens zwei Laschenstreifen überdeckt wird, Vertiefungen in die Oberseite und/oder Unterseite eingebracht werden. Die Tiefen der Vertiefungen sind an die Materialstärken der Laschenstreifen angepasst.

Als besonders geeignet haben sich Laschenstreifen erwiesen, die auf Basis eines thermoplastischen Elastomers, insbesondere auf Basis von thermoplastischem Polyurethan (TPU) hergestellt sind. Andere geeignete Materialien umfassen. Neben einem vorzugsweise verwendeten thermoplastischen Polyurethan (TPU) können auch weitere thermoplastische Elastomere eingesetzt werden. Hierfür stehen die gesamte Gruppe der thermoplastischen Polyurethane, die Gruppe der thermoplastischen Copolyester und die Gruppe der thermoplastischen Polyether-Block-Amide zur Verfügung.

Um ein besonders Haltbares und schwer zu fälschendes Sicherheitsdokument zu erhalten, in dessen Kartenkörper eine Vielzahl von unterschiedlichen Sicherheitsmerkmalen integriert werden können, wird es bevorzugt, dass der Kartenkörper aus mehreren Polymerschichten laminiert ist oder wird, von denen mindestens eine auf Polycarbonatbasis hergestellt ist.

Der Kartenkörper wird vorzugsweise als Laminat aus Substratschichten hergestellt, die aus einem Kunststoffmaterial hergestellt sind. Neben dem bevorzugten Kunststoffmaterial Polycarbonat (PC) werden weitere Kunststoffmaterialien verwendet. Diese umfassen Polyethersulfon (PES), Polyetheretherketon (PEEK), Polyphenylenoxid (PPO), Polyphenylensulfid (PPS), Polyethylenterephthalat (PET), Polybutylenterephthalat (PBT), Polyoxymethylen (POM), Polysulfon (PSU), Polyethermid (PEI) oder Polyamid (PA). Der Kartenkörper kann auch Substratschichten aus einem anderen Material, beispielsweise aus Papier, umfassen, die im fertigen Kartenkörper vorzugsweise vollständig von Kunststoff der übrigen Substratschichten eingeschlossen sind.

Nachfolgend wird die Erfindung anhand eines bevorzugten Ausführungsbeispiels näher erläutert. Hierbei zeigen:
- Fig. 1: eine schematische Darstellung zur Veranschaulichung einer Herstellung einer Dokumentenkarte nach dem Stand der Technik;
- Fig. 2: eine schematische Schnittdarstellung einer Dokumentenkarte nach dem Stand der Technik;
- Fig. 3: eine schematische Schnittdarstellung einer Dokumentenkarte nach einer Ausführungsform der Erfindung; und
- Fig. 4: eine schematische Draufsicht auf eine Dokumentenkarte.

In Fig. 2 ist eine schematische Schnittdarstellung einer weiteren Dokumentenkarte 1' nach dem Stand der Technik ähnlich zu der nach Fig. 1. dargestellt. Die Dokumentenkarte 1' umfasst einen Kartenkörper 2', der mittels einer Lamination hergestellt ist. Hierbei sind Substratschichten 5', 7', die vorzugsweise aus einem Polycarbonatmaterial bestehen, mit einer mittleren Substratschicht 6' zu einem Laminationskörper über eine Anwendung von Wärme und Druck miteinander zusammengefügt. Die mittlere Substratschicht 6' ist aus einem thermoplastischen Elastomer, beispielsweise thermoplastischem Polyurethan hergestellt. Die mittlere Substratschicht 6' ragt aus dem Kartenkörper 2' heraus. Der herausragende Abschnitt der mittleren Substratschicht 6' bildet einen Einfügeabschnitt oder Laschenabschnitt 3'. Wie oben mit Bezug auf Fig. 1 erläutert ist, ist eine Herstellung einer solchen Dokumentenkarte 1' nach dem Stand der Technik aufwendig.

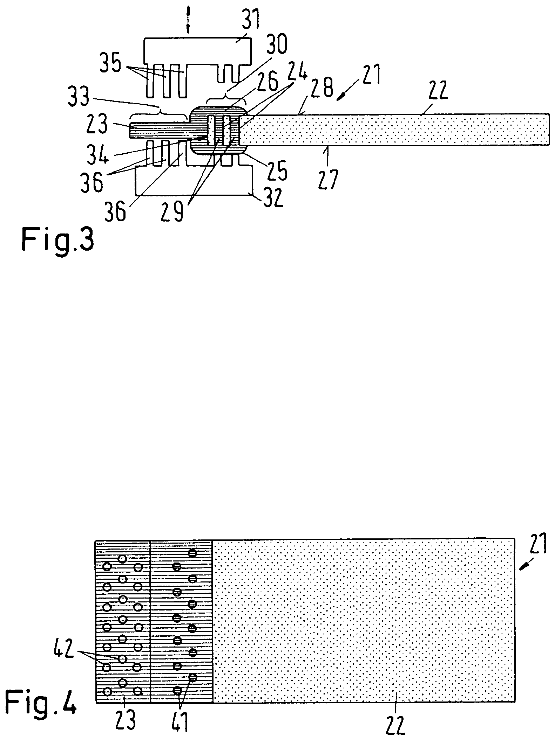

In Fig. 3 ist eine schematische Schnittdarstellung einer Dokumentenkarte 21 nach einer Ausführungsform dargestellt. Die Dokumentenkarte 21 umfasst einen Kartenkörper 22 und einen Laschenabschnitt 23, der mit dem Kartenkörper formschlüssig verbunden ist. Der Dokumentkörper 22 kann auf beliebige Art hergestellt werden oder sein. Insbesondere kann es sich um einen mittels einer Lamination mehrerer gleicher oder verschiedener Substratschichten hergestellten Laminationskörper handeln. Der Kartenkörper 22 kann alle dem Fachmann bekannten Sicherheitsmerkmale und Sicherheitselemente umfassen. Vorzugsweise ist der Kartenkörper 22 aus Substratschichten hergestellt, die auf Polycarbonatbasis erzeugt sind und sich bei der Lamination Stoffschlüssig zu einem monolithischen Kartenkörper 22 verbinden.

In den Kartenköper 22 sind oder werden entlang eines Rands 34 als Durchgangslöcher 24 ausgebildete Aussparungen eingebracht. Diese können gestanzt, gebohrt oder auf beliebige andere Weise in den Kartenkörper 22 eingebracht werden oder sein. Die Durchgangslöcher 24 müssen keine Bohrlöcher sein, die zylindrische Form aufweisen. Die Durchgangslöcher 24 können beliebig geformte Aussparungen in dem Kartenkörper 22 sein, die diesen vollständig durchdringen.

Bei der Herstellung der Dokumentenkarte 21 wird der Kartenkörper 22 zwischen zwei Laschenstreifen 25, 26 angeordnet. Die Laschenstreifen überdecken jeweils die Durchgangslöcher 24. Ein Laschenstreifen 25 liegt an einer Unterseite 27 des Kartenkörpers 22 an, der andere Laschenstreifen 26 liegt an einer Oberseite 28 des Kartenkörpers 22 an.

Während, vor oder nach einem Anordnen zwischen den Laschenstreifen 25, 26 werden die Durchgangslöcher 24 mit einem Verbindungsmaterial 29 verfüllt. Das Verbindungsmaterial 29 umfasst vorzugsweise Polymermaterial, das auf derselben Basis wie die Laschenstreifen 25, 26 hergestellt ist. Das Verbindungsmaterial 29 kann beispielsweise in Form eines Granulats eingebracht werden. Die Laschenstreifen 25, 26 bestehen bei einer Ausführungsform beispielsweise aus thermoplastischem Polyurethan. Bei dieser Ausführungsform umfasst das Verbindungsmaterial 29 ebenfalls thermoplastisches Polyurethan. Bei anderen Ausführungsformen kann ein Haftvermittler, beispielsweise ein Kleber als Verbindungsmaterial verwendet werden.

An den Stellen eines Überlappungsbereichs 30 der Laschenstreifen 25, 26 mit dem Kartenkörper 22, an denen Durchgangslöcher 24 in dem Kartenkörper 22 ausgebildet und mit dem Verbindungsmaterial 29 verfüllt sind, wird zeitgleich oder zeitversetzt Energie in Form von Schallwellen, insbesondere in Form von Ultraschallwellen, eingetragen. Vorzugsweise werden Die Schallwellen mittels eines Piezokristalls erzeugt und über eine Sonotrode 31 eingebracht. Hierzu wird die Sonotrode 31 in Kontakt mit einem der Laschenstreifen 25, 26 gebracht. Der andere Laschenstreifen ruht währenddessen vorzugsweise auf einem Maschinentisch 32, relativ zu dem die Sonotrode 31 beweglich gelagert ist. Während der Einkoppelung von Schall erwärmen sich das Verbindungsmaterial 29 und zumindest die dem Verbindungsmaterial 29 zugewandten Seiten der Laschenstreifen 25, 26 in den die Durchgangslöcher 24 überdeckenden Bereichen. Zwischen der Sonotorde 31 und Maschinentisch 32 kann eine Druckkraft zeitgleich und/oder zeitversetzt mit dem Einbringen der Schallenergie ausgeübt werden. Das erwärmte Verbindungsmaterial 29 und die lokal erwärmten Laschenstreifen 25, 26 verbinden sich, vorzugsweise Stoffschlüssig miteinander durch die Durchgangslöcher 24 hindurch. Somit sind zwischen den Laschenstreifen 25, 26 Verbindungen ausgebildet. Hierdurch sind die Laschenstreifen 25, 26 formschlüssig mit dem Kartenkörper 22 verbunden.

Zusätzlich werden die Laschenstreifen vorzugsweise in jenem Bereich 33, an dem die Laschenstreifen 25,26 den Kartenkörper 22 überragen, miteinander durch ein Eintragen von Schallenergie miteinander verbunden. Dieser Bereich bildet den Einfügebereich oder Laschenabschnitt 23. Der Energieeintrag erfolgt vorzugsweise zeitgleich mit dem Energieeintrag an den Stellen, an denen Durchgangslöcher 24 ausgebildet sind. Der Energieeintrag erfolgt vorzugsweise Punktförmig mit derselben Sonotrode 31. Bei anderen Ausführungsformen kann der Energieeintrag vor oder nach dem Verbinden der Laschenstreifen 25, 26 mit dem Kartenkörper 22 erfolgen.

In Fig. 4 ist schematisch eine Draufsicht auf die Oberseite 28 des Dokumentkörpers 21 nach Fig. 3 dargestellt. Identische Bezugszeichen kennzeichnen gleiche technische Merkmale. Gut zuerkennen ist ein Muster von Ultraschallschweißpunkten 41, an denen durch die Durchgangslöcher hindurch Verbindungen zwischen den Laschenstreifen ausgebildet sind, von denen man nur den Laschenstreifen 26 sieht. ebenso sind die Ultraschallschweißpunkte 42 zuerkennen, mittels derer die Laschenstreifen 25, 26 in dem Laschenabschnitt 23 miteinander verbunden sind. An diese Muster der Ultraschallschweißpunkte 41, 42 sind Erhebungen 35 der Sonotrode 31 sowie Erhebungen 36 auf dem Maschinentisch 32 angepasst (vergleiche Fig. 3).

Bei einer anderen Ausführungsform weist der Kartenkörper Vertiefungen benachbart zu dem Rand auf, entlang dessen die Durchgangslöcher ausgebildet sind. Die Vertiefungen sind an einen Überlappungsbereich der Laschenstreifen mit dem Kartenkörper und eine Materialstärke der Laschenstreifen angepasst. Hierdurch erhält man eine Dokumentenkarte, die im Bereich einer Befestigung der Laschenstreifen an dem Kartenkörper keine erhöhte Materialstärke aufweist. Die Vertiefungen können auf beliebige Weise, beispielsweise über ein Abtragen von Material oder ein Abflachen, hergestellt werden.

Die beschriebenen Dokumentenkarten können mit kurzen Taktzeiten hergestellt werden. Hierbei wird bei einem Geringen Energieaufwand ein reproduzierbares Verbindungsergebnis erzielt. Ein Verschleiß an der Vorrichtung zur Herstellung ist gering. Es werden sehr hohe Genauigkeiten bei der Ausbildung der unlösbaren Verbindungen durch die Durchgangslöcher hindurch erreicht. Eine Materialbelastung sowohl für das Material der Laschenstreifen als auch für das Material des Kartenkörpers und hierin angeordneter oder integrierter Sicherheitselemente und Sicherheitsmerkmale ist sehr gering. Eine Automatisierung wird erleichtert. Ferner wird eine Kleinserienproduktion von Dokumentenkarten ermöglicht.

### Bezugszeichenliste

- 1, 1': Dokumentenkarte
- 2, 2': Kartenkörper
- 3 , 3': Laschenabschnitt
- 4: Substratschicht
- 5, 5': Substratschicht
- 6, 6': mittlere Substratschicht
- 7, 7': Substratschicht
- 8: Substratschicht
- 9: Schichtenstapel
- 10: herausragender Abschnitt
- 11: Überlappungsbereich
- 12, 13: Laminierbleche
- 14, 15: Vorsprünge
- 21: Dokumentenkarte
- 22: Kartenkörper
- 23: Laschenabschnitt
- 24: Durchgangslöcher
- 25, 26: Laschenstreifen
- 27: Unterseite des Kartenkörpers
- 28: Oberseite des Kartenkörpers
- 29: Verbindungsmaterial
- 30: Überlappungsbereich
- 31: Sonotrode
- 32: Maschinentisch
- 33: Bereich, in dem die Laschenstreifen einen Kartenkörper überragen
- 34: Rand
- 35, 36: Erhebungen
- 41, 42: Ultraschallschweißpunkte

## Patentansprüche

1. Verfahren zum Herstellen einer Dokumentenkarte (21), die in ein als Buch ausgeführtes Sicherheitsdokument einfügbar ist, umfassend die Schritte:
Bereitstellen eines Kartenkörpers (22),
Einbringen von Durchgangslöchern (24) in den Kartenkörper (22) entlang eines Rands (34) des Kartenkörpers (22),
Bereitstellen von mindestens zwei Laschenstreifen (25, 26);
Anordnen des Kartenkörpers (22) zwischen den mindestens zwei Laschenstreifen (25, 26), sodass die Durchganglöcher jeweils auf einer Oberseite (28) und einer Unterseite (27) des Kartenkörpers (22) überdeckt sind und die Laschenstreifen (25, 26) jeweils über den Rand (34) des Kartenkörpers (22) hinausragen,
Einbringen von Energie in Form von Schallwellen an den Stellen der Durchgangslöcher (24), um eine Verbindung zwischen den mindestens zwei Laschenstreifen (25, 26) herzustellen und so die Laschenstreifen (25, 26) formschlüssig mit dem Kartenkörper (22) verbunden werden.

2. Verfahren nach Anspruch 1, **dadurch gekennzeichnet, dass** die Durchgangslöcher (24) mit einem Verbindungsmaterial (29) vor oder während des Anordnens zwischen den mindestens zwei Laschenstreifen (25, 26) verfüllt werden.

3. Verfahren nach Anspruch 2, **dadurch gekennzeichnet, dass** die Laschenstreifen (25, 26) über das Verbindungsmaterial (29) miteinander stoffschlüssig verbunden werden.

4. Verfahren nach Anspruch 2 oder 3, **dadurch gekennzeichnet, dass** das Verbindungsmaterial (29) Polymere oder Polymerderivate des Polymers umfasst, auf dessen Basis die Laschenstreifen (25, 26) hergestellt werden oder sind.

5. Verfahren nach einem der Ansprüche 2 bis 4, **dadurch gekennzeichnet, dass** das Verbindungsmaterial (29) einen Haftvermittler, insbesondere einen Klebstoff, umfasst.

6. Verfahren nach einem der vorangehenden Ansprüche, **dadurch gekennzeichnet, dass** die Laschenstreifen (25, 26) in jenem Bereich (33), in dem diese über den Rand (34) des Kartenkörpers (22) hinausragen, über einen Energieeintrag in Form von Schallwellen miteinander zu einem Einfügeabschnitt verbunden werden.

7. Verfahren nach einem der vorangehenden Ansprüche, **dadurch gekennzeichnet, dass** von dem Kartenkörper (22) an dessen Oberseite (28) und/oder dessen Unterseite (27) in einem Bereich oder den Bereichen, in denen die mindestens zwei Laschenstreifen (25, 26) den Kartenkörper (22) überdecken, Material abgetragen wird, sodass die Laschenstreifen (25, 26) in der fertig gestellten Dokumentenkarte (21) nicht über die Oberseite (28) und/oder Unterseite (27) des Kartenkörpers (22) vorstehen.

8. Dokumentenkarte (21), die in ein als Buch ausgeführtes Sicherheitsdokument einfügbar ist, umfassend:
einen Kartenkörper (22), in dem entlang eines Rands (34) des Kartenkörpers (22) Durchgangslöcher (24) ausgebildet sind,
mindestens zwei Laschenstreifen (25, 26), wobei der Kartenkörpers (22) zwischen den mindestens zwei Laschenstreifen (25, 26) angeordnet ist, sodass die Durchganglöcher jeweils auf beiden Seiten des Kartenkörpers (22) überdeckt sind und die Laschenstreifen (25, 26) jeweils über den Rand (34) des Kartenkörpers (22) hinausragen,
und wobei Laschenstreifen (25, 26) durch die Durchgangslöcher (24) miteinander Verbunden sind und so die Laschenstreifen (25, 26) formschlüssig mit dem Kartenkörper (22) verbunden sind, wobei die Verbindungen über ein Einbringen von Energie in Form von Schallwellen an den Stellen der Durchgangslöcher (24) hergestellt sind.

9. Dokumentenkarte (21) nach Anspruch 8, **dadurch gekennzeichnet, dass** in den Durchgangslöcher (24) ein Verbindungsmaterial (29) angeordnet ist, über das die Verbindung mit zwischen den mindestens zwei Laschenstreifen (25, 26) ausgebildet ist.

10. Dokumentenkarte (21) nach Anspruch 9, **dadurch gekennzeichnet, dass** die Laschenstreifen (25, 26) über das Verbindungsmaterial (29) miteinander stoffschlüssig verbunden sind.

11. Dokumentenkarte (21) nach Anspruch 9 oder 10, **dadurch gekennzeichnet, dass** das Verbindungsmaterial (29) Polymere oder Polymerderivate des Polymers umfasst, auf dessen Basis die Laschenstreifen (25, 26) hergestellt sind.

12. Dokumentkörper nach einem der Ansprüche 9 bis 11, **dadurch gekennzeichnet, dass** das Verbindungsmaterial (29) einen Haftvermittler, insbesondere einen Klebstoff, umfasst.

13. Dokumentenkarte (21) nach einem der Ansprüche 8 bis 12, **dadurch gekennzeichnet, dass** die Laschenstreifen (25, 26) in jenem Bereich (33), in dem diese über den Rand (34) des Kartenkörpers (22) hinausragen, miteinander zu einem Einfügeabschnitt verbunden sind, wobei diese Verbindungen über einen Energieeintrag in Form von Schallwellen hergestellt sind.

14. Dokumentenkarte (21) nach einem der Ansprüche 8 bis 13, **dadurch gekennzeichnet, dass** von dem Kartenkörper (22) an dessen Oberseite (28) und/oder dessen Unterseite (27) in einem Bereich oder den Bereichen, in denen die mindestens zwei Laschenstreifen (25, 26) den Kartenkörper (22) überdecken, Material abgetragen ist oder Vertiefungen oder Aussparungen ausgebildet sind, sodass die Laschenstreifen (25, 26) in der fertig gestellten Dokumentenkarte (21) nicht über die Oberseite (28) und/oder Unterseite (27) des Kartenkörpers (22) vorstehen.

15. Dokumentenkarte (21) nach einem der Ansprüche 8 bis 14, **dadurch gekennzeichnet, dass** die Verbindungen, über die die Laschenstreifen (25, 26) durch die Durchgangslöcher (24) miteinander Verbunden sind, Ultraschallschweißverbindungen sind.

## Claims

1. Method for producing a document card (21) which can be inserted into a security document that is configured as a book, comprising the steps:
providing a card body (22);
introducing through-holes (24) into the card body (22) along a margin (34) of the card body (22);
provision of at least two tab strips (25, 26);
arranging the card body (22) between the at least two tab strips (25, 26), in such a manner that the through-holes are covered in each case on an upper face (28) and a lower face (27) of the card body (22), and the tab strips (25, 26) project beyond the margin (34) of the card body (22);
introducing of energy in the form of sound waves at the locations of the through-holes (24), in order to establish a connection between the at least two tab strips (25, 26), and thereby to connect the tab strips (25, 26) to the card body (22) in positive fit.

2. Method according to claim 1, **characterised in that** the through-holes (24) are filled with a connecting material (29) before or during the arrangement between the at least two tab strips (25, 26).

3. Method according to claim 2, **characterised in that** the tab strips (25, 26) are connected to one another in material fit by way of the connecting material (29).

4. Method according to claim 2 or 3, **characterised in that** the connecting material (29) comprises polymers or polymer derivates of the polymer, on the basis of which the tab strips (25, 26) will be or are made.

5. Method according to any one of claims 2 to 4, **characterised in that** the connecting material (29) comprises an adhesive agent, in particular a glue.

6. Method according to any one of the preceding claims, **characterised in that** the tab strips (25, 26) are connected to one another **in that** area (33) in which they project over the margin (34) of the card body (22) by means of an introduction of energy in the form of sound waves.

7. Method according to any one of the preceding claims, **characterised in that** material is removed from the card body (22) on its upper face (28) and/or on its lower face (27) in an area or areas in which the at least two tab strips (25, 26) cover the card body (22), such that, in the finished document card (21), the tab strips (25, 26) do not project over the upper face (28) and/or lower face (27) of the card body (22).

8. Document card (21), which can be inserted into a security document configured as a book, comprising:
A card body (22), in which through-holes (24) are formed along a margin (34) of the card body (22),
at least two tab strips (25, 26), wherein the card body (22) is arranged between the at least two tab strips (25, 26), such that the through-holes are in each case covered on both sides of the card body (22), and the tab strips (25, 26) in each case project over the margin (34) of the card body (22),
and wherein tab strips (25, 26) are connected to one another through the through-holes (24) and therefore the tab strips (25, 26) are connected in positive fit to the card body (22), wherein the connections are produced by an application of energy in the form of sound waves at the locations of the through-holes (24).

9. Document card (21) according to claim 8, **characterised in that** a connection material (29) is arranged in the through-holes (24), by means of which the connection is formed between the at least two tab strips (25, 26).

10. Document card (21) according to claim 9, **characterised in that** the tab strips (25, 26) are connected to each other in material fit by means of the connection material (29).

11. Document card (21) according to claim 9 or 10, **characterised in that** the connecting material (29) comprises polymers or polymer derivates of the polymer, on the basis of which the tab strips (25, 26) are made.

12. Document card according to any one of claims 9 to 11, **characterised in that** the connection material (29) comprises an adhesive agent, in particular a glue.

13. Document card (21) according to any one of claims 8 to 12, **characterised in that** the tab strips (25, 26) are connected to one another at an insertion section, **in that** area (33) in which they project over the margin (34) of the card body (22), wherein these connections are established by means of an introduction of energy in the form of sound waves.

14. Document card (21) according to any one of claims 8 to 13, **characterised in that** material is removed from the card body (22) on its upper face (28) and/or on its lower face (27) in an area or areas in which the at least two tab strips (25, 26) cover the card body (22), or depressions or cut-out openings are formed, such that, in the finished document card (21), the tab strips (25, 26) do not project over the upper face (28) and/or lower face (27) of the card body (22).

15. Document card (21) according to any one of claims 8 to 14, **characterised in** the connections by means of which the tab strips (25, 26) are connected to one another through the through-holes (24) are ultrasonic weld connections.

## Revendications

1. Procédé de fabrication d'une carte de document (21), qui peut être insérée dans un document de sécurité se présentant sous forme de livret, comprenant les étapes consistant à :
fournir un corps de carte (22),
faire des trous débouchants (24) dans le corps de carte (22) le long d'un bord (34) du corps de carte (22), fournir au moins deux bandes de jonction (25, 26) ;
disposer le corps de carte (22) entre les au moins deux bandes de jonction (25, 26) de manière que les trous débouchants soient recouverts chacun sur une face supérieure (28) et sur une face inférieure (27) du corps de carte (22) et que les bandes de jonction (25, 26) dépassent chacune du bord (34) du corps de carte (22), injecter de l'énergie sous forme d'ondes sonores sur les emplacements des trous débouchants (24) afin d'établir une liaison entre les au moins deux bandes de jonction (25, 26) et d'assembler ainsi les bandes de jonction (25, 26) au corps de carte (22) par coopération de formes.

2. Procédé selon la revendication 1, **caractérisé en ce que** les trous débouchants (24) sont remplis d'un matériau de liaison (29) avant ou pendant la disposition entre les au moins deux bandes de jonction (25, 26).

3. Procédé selon la revendication 2, **caractérisé en ce que** les bandes de jonction (25, 26) sont assemblées l'une à l'autre par liaison de matière via le matériau de liaison (29).

4. Procédé selon la revendication 2 ou 3, **caractérisé en ce que** le matériau de liaison (29) comprend des polymères ou des dérivés polymères du polymère sur la base duquel les bandes de jonction (25, 26) sont fabriquées.

5. Procédé selon l'une quelconque des revendications 2 à 4, **caractérisé en ce que** le matériau de liaison (29) comprend un agent adhésif, en particulier une colle.

6. Procédé selon l'une quelconque des revendications précédentes, **caractérisé en ce que** les bandes de jonction (25, 26), dans la zone (33) où celles-ci dépassent du bord (34) du corps de carte (22), sont assemblées l'une à l'autre via un apport d'énergie sous forme d'ondes sonores pour former une partie d'insertion.

7. Procédé selon l'une quelconque des revendications précédentes, **caractérisé en ce qu'**un matériau est enlevé du corps de carte (22) au niveau de sa face supérieure (28) et/ou de sa face inférieure (27) dans une zone ou les zones où les au moins deux bandes de jonction (25, 26) recouvrent le corps de carte (22), de sorte que les bandes de jonction (25, 26) ne fassent pas saillie au-dessus de la face supérieure (28) et/ou de la face inférieure (27) du corps de carte (22) lorsque la carte de document (21) est achevée.

8. Carte de document (21), qui peut être insérée dans un document de sécurité se présentant sous forme de livret, comprenant :
un corps de carte (22), dans lequel sont réalisés des trous débouchants (24) le long d'un bord (34) du corps de carte (22),
au moins deux bandes de jonction (25, 26), dans laquelle le corps de carte (22) est disposé entre les au moins deux bandes de jonction (25, 26) de manière que les trous débouchants soient recouverts chacun sur les deux faces du corps de carte (22) et que les bandes de jonction (25, 26) dépassent chacune du bord (34) du corps de carte (22), et dans laquelle les bandes de jonction (25, 26) sont assemblées l'une à l'autre à travers les trous débouchants (24) et les bandes de jonction (25, 26) sont ainsi assemblées au corps de carte (22) par coopération de formes, dans laquelle les liaisons sont établies via une injection d'énergie sous forme d'ondes sonores sur les emplacements des trous débouchants (24).

9. Carte de document (21) selon la revendication 8, **caractérisée en ce qu'**un matériau de liaison (29) est disposé dans les trous débouchants (24), via lequel la liaison entre les au moins deux bandes de jonction (25, 26) est réalisée.

10. Carte de document (21) selon la revendication 9, **caractérisée en ce que** les bandes de jonction (25, 26) sont assemblées l'une à l'autre par liaison de matière via le matériau de liaison (29).

11. Carte de document (21) selon la revendication 9 ou 10, **caractérisée en ce que** le matériau de liaison (29) comprend des polymères ou des dérivés polymères du polymère sur la base duquel les bandes de jonction (25, 26) sont fabriquées.

12. Corps de document selon l'une quelconque des revendications 9 à 11, **caractérisé en ce que** le matériau de liaison (29) comprend un agent adhésif, en particulier une colle.

13. Carte de document (21) selon l'une quelconque des revendications 8 à 12, **caractérisée en ce que** les bandes de jonction (25, 26), dans la zone (33) où celles-ci dépassent du bord (34) du corps de carte (22), sont assemblées l'une à l'autre pour former une partie d'insertion, dans laquelle ces liaisons sont établies via un apport d'énergie sous forme d'ondes sonores.

14. Carte de document (21) selon l'une quelconque des revendications 8 à 13, **caractérisée en ce qu'**un matériau est enlevé du corps de carte (22) au niveau de sa face supérieure (28) et/ou de sa face inférieure (27) dans une zone ou les zones où les au moins deux bandes de jonction (25, 26) recouvrent le corps de carte (22) ou des creux ou des évidements sont réalisés, de sorte que les bandes de jonction (25, 26) ne fassent pas saillie au-dessus de la face supérieure (28) et/ou de la face inférieure (27) du corps de carte (22) lorsque la carte de document (21) est achevée.

15. Carte de document (21) selon l'une quelconque des revendications 8 à 14, **caractérisée en ce que** les liaisons via lesquelles les bandes de jonction (25, 26) sont assemblées l'une à l'autre à travers les trous débouchants (24) sont des liaisons de soudure par ultrasons.
